Europäisches Patentamt

European Patent Office

Office européen des brevets

(19)

(11) Numéro de publication : **0 403 345 B1**

(12) # FASCICULE DE BREVET EUROPEEN

(45) Date de publication du fascicule du brevet :
**30.12.92 Bulletin 92/53**

(51) Int. Cl.⁵ : **F16L 37/28,** B05B 12/14

(21) Numéro de dépôt : **90401579.9**

(22) Date de dépôt : **08.06.90**

(54) **Dispositif de raccordement de deux parties de conduit.**

(30) Priorité : **16.06.89 FR 8908026**

(43) Date de publication de la demande :
**19.12.90 Bulletin 90/51**

(45) Mention de la délivrance du brevet :
**30.12.92 Bulletin 92/53**

(84) Etats contractants désignés :
**BE DE ES GB IT NL SE**

(56) Documents cités :
**EP-A- 187 892
DE-A- 3 228 157
FR-A- 2 406 480**

(73) Titulaire : **SAMES S.A.
Z.I.R.S.T., 13 Chemin de Malacher
F-38240 Meylan (FR)**

(72) Inventeur : **Giroux, Patrice
2 rue de Gavanières
F-38120 Saint Egreve (FR)**
Inventeur : **Rey, Jean-Christophe
10 rue Georges Méliès
F-38130 Echirolles (FR)**

(74) Mandataire : **CABINET BONNET-THIRION
95 Boulevard Beaumarchais
F-75003 Paris (FR)**

EP 0 403 345 B1

# Description

L'invention se rapporte à un dispositif de raccordement de deux parties de conduit; elle concerne plus particulièrement un perfectionnement permettant d'éviter toute pollution du milieu extérieur lorsque les deux éléments du dispositif sont séparés, tout en évitant l'entrée d'air dans le circuit.

Dans une installation d'application de peinture, on utilise fréquemment des dispositifs de raccordement entre certaines parties d'un circuit de distribution de peinture. Pour limiter la pollution de l'environnement, il est souhaitable d'éviter tout écoulement de peinture à chaque opération de déconnexion. Il est aussi nécessaire d'éviter que de la peinture séchée après s'être répandue au voisinage de l'orifice de raccordement, puisse empêcher un bon fonctionnement du dispositif. Enfin, il est nécessaire que le mécanisme de couplage soit conçu pour éviter toute entrée d'air dans les circuits. Le brevet US 4 313 475 décrit un dispositif de raccordement dans lequel une vanne de sortie de fluide commande l'ouverture d'un clapet antiretour lui faisant face et permettant l'entrée d'un fluide. Ce document ne montre aucun agencement permettant de nettoyer les parties souillées, au désaccouplement. Par ailleurs, le document EP 0 187 892 décrit un dispositif voisin dans lequel deux clapets sont susceptibles d'être accouplés pour être déplacés conjointement par vissage-dévissage pour provoquer le passage du fluide et comportant également des moyens de stérilisation ou nettoyage des surfaces de rencontre des deux embouts.

L'invention concerne un perfectionnement permettant un raccordement plus rapide et plus fiable des deux embouts.

L'invention concerne un dispositif de raccordement de deux parties de conduit, notamment pour un circuit de fluide polluant, comprenant un premier embout renfermant un premier clapet mobile coopérant avec un premier siège pour isoler une sortie de fluide, un second embout comportant un élément tubulaire définissant un conduit d'entrée et renfermant un second clapet mobile, sollicité vers un second siège pour isoler une entrée de fluide, des moyens de nettoyage des surfaces de rencontre des deux embouts et dans lesquels les deux clapets sont respectivement pourvus de surfaces de contact mutuel de formes complémentaires et sont agencés pour pouvoir se déplacer conjointement en restant en contact, de façon à permettre le passage dudit fluide, caractérisé en ce que lesdits moyens de nettoyage comportent un élément coaxial extérieur audit élément tubulaire dans lequel ledit second clapet est monté mobile axialement en étant élastiquement sollicité vers ledit second siège lui-même défini coaxialement audit conduit d'entrée, en ce que ces deux éléments sont montés avec possibilité de coulissement axial relatif, en ce que ledit élément coaxial est susceptible de venir s'appliquer contre une extrémité dudit premier embout sur laquelle se situe ledit premier clapet, ledit premier clapet étant élastiquement sollicité vers ledit premier siège, et en ce que, lorsque les deux embouts sont raccordés, ledit élément coaxial définit avec ledit élément tubulaire et ladite extrémité, une chambre annulaire d'injection de fluide de nettoyage et/ou d'air de séchage.

L'invention sera mieux comprise et d'autres avantages de celle-ci apparaîtront plus clairement à la lumière de la description qui va suivre d'un dispositif conforme à son principe, donnée uniquement à titre d'exemple et faite en référence aux dessins annexés dans lesquels:

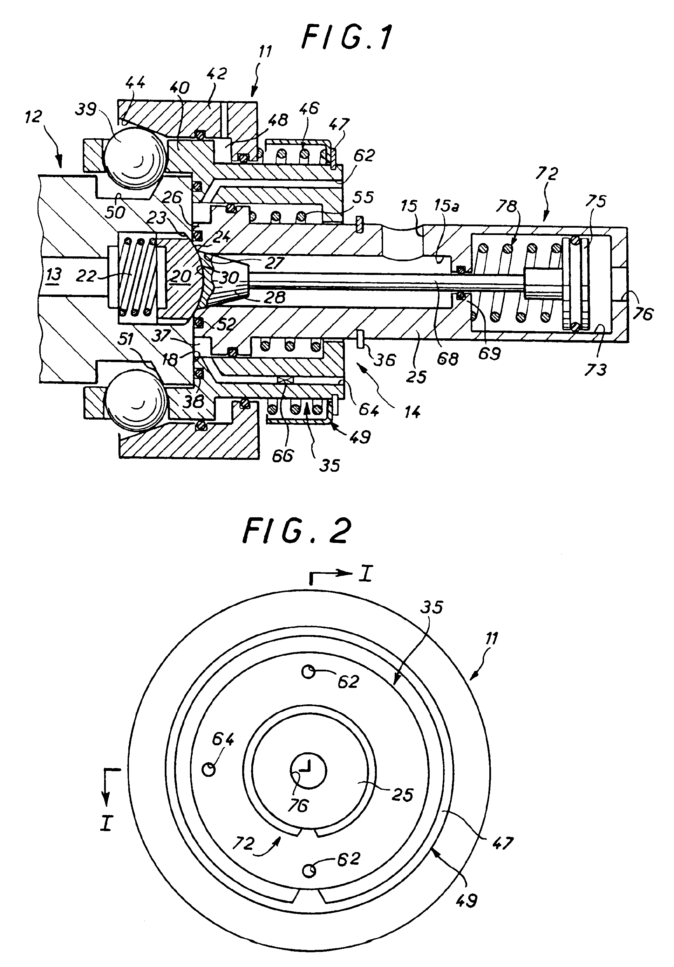

- la figure 1 est une vue longitudinale du dispositif de raccordement, suivant une coupe I-I de la figure 2, et
- la figure 2 est une vue de droite de la figure 1.

En se reportant aux dessins, on a représenté un dispositif de raccordement 11 de deux parties de conduit, comportant essentiellement deux sous-ensembles séparables, à savoir un premier embout 12 dans lequel est définie une sortie 13 de fluide et un second embout 14 dans lequel est définie une entrée 15 de ce même fluide. Classiquement, ce fluide est une peinture ou un vernis. Le premier embout peut être porté par l'extrémité d'un bras de robot tandis que le second embout, fixé à la paroi d'une cabine de projection, est connecté pour être alimenté par un conduit de distribution d'un tel fluide. Les deux embouts peuvent s'assembler bout à bout suivant une direction axiale commune, comme représenté. L'embout 12 comporte une extrémité 18 en forme de paroi annulaire transversale, au centre de laquelle est agencé un premier clapet 20 mobile axialement à l'intérieur d'une cavité en communication avec la sortie 13, ce clapet est sollicité par un ressort 22 vers un siège 23, pour isoler la sortie 13. Le clapet présente une surface convexe 24 en forme de calotte sphérique. Lorsque le clapet est en application sur son siège, cette surface convexe fait légèrement saillie au-delà de la paroi constituant l'extrémité 18.

L'embout 14 comporte un élément tubulaire 25 à l'intérieur duquel est défini axialement un conduit d'entrée 15a en communication avec l'entrée 15 et dont une extrémité, débouchant sur une surface transversale 26, destinée à s'appliquer contre la face de l'extrémité 18, comporte une partie tronconique formant le siège 27 d'un second clapet 28, cet agencement permettant d'isoler l'entrée 15. Le second clapet 28, de forme générale tronconique, a une surface d'extrémité concave 30 en forme de calotte sphérique, venant s'appliquer contre la surface 24 du clapet 20. Les deux calottes sphériques sont de préférence de même rayon de sorte qu'il ne puisse subsister pratiquement aucun espace d'air entre les deux clapets, après assemblage. Cependant, pour assurer une bonne fermeture de chaque clapet, respectivement, il peut être envisagé de laisser subsister un très faible espace entre leurs faces en regard. Autrement dit, les deux clapets sont respectivement pourvues de surface de contact mutuel de formes complémentaires. Ils sont agencés pour pouvoir se déplacer conjointement en restant en contact, de façon à permettre l'écoulement du fluide de l'entrée 15 vers la sortie 13. Pour ce faire, le diamètre extérieur du clapet 28 est quelque peu inférieur au diamètre de l'orifice du siège 23 dudit premier clapet, de sorte que, lorsque le clapet 28 est poussé en éloignement de son siège 27, il sépare aussi le clapet 20 de son siège 23, permettant l'écoulement du fluide entre l'entrée 15 et la sortie 13.

L'embout 14 comporte aussi des moyens de nettoyage des deux clapets et, plus généralement, de toute l'interface de jonction des deux embouts.

Dans l'exemple décrit, ces moyens de nettoyage comprennent un élément coaxial 35 monté extérieurement à l'élément tubulaire 25. Ces deux éléments sont montés avec possibilité de coulissement axial relatif. Ce coulissement est limité par un circlip 36 fixé à l'élément 25. Ledit élément coaxial 35 est susceptible de venir s'appliquer et se fixer contre l'extrémité 18 dudit premier embout 12 et de s'y fixer. L'élément coaxial 35 forme donc une sorte de douille coulissante tandis que l'élément tubulaire 25 comporte, à son extrémité, un épaulement extérieur permettant de définir avec ledit élément coaxial 35 et l'extrémité 18 du premier embout, une chambre annulaire 37 d'injection de fluide de nettoyage. Les parois de cette chambre 37 sont avantageusement traitées pour éviter l'adhérence des fluides employés, par exemple recouvertes de polytétrafluoréthylène. Le fluide de nettoyage en question est au moins un liquide de rinçage adapté à la nature du produit et de préférence, aussi, de l'air comprimé injecté après le rinçage proprement dit. Un joint 38 évite toute fuite vers l'extérieur.

La jonction mécanique des deux embouts est réalisée, ici, grâce à des billes 39 engagées dans des trous correspondants d'une jupe cylindrique 40 de l'élément coaxial 35. Extérieurement à celui-ci, se trouve un élément de blocage tubulaire 42 coulissant sur l'élément coaxial et comportant une rampe 44 à faible pente, assurant le maintien des billes dans leurs trous. L'élément de blocage est sollicité vers les billes par un ressort 46 monté en compression entre l'élément de blocage et un circlip 47 solidaire de l'élément coaxial 35. Une chambre d'actionnement 48 est définie entre les éléments 35 et 42. On y injecte de l'air comprimé pour la commande de déblocage des billes. Une douille à épaulement 49 limite la course de l'élément 42, sous l'effet de l'air comprimé. Elle entoure le ressort 46 et prend appui sur le circlip 47. Lorsque les deux embouts sont connectés l'un à l'autre, les billes, maintenues par l'élément de blocage, sont engagées dans une gorge annulaire 50, externe, ayant un flanc incliné 51, de l'embout 12. Cet engagement assure l'application de la surface transversale 26 contre l'extrémité 18 du premier embout, un joint d'étanchéité annulaire 52 étant prévu entre ces deux surfaces. Par ailleurs, un ressort 55 est monté entre deux épaulements respectifs de l'élément coaxial 35 et de l'élément tubulaire 25. L'action de ce ressort a donc tendance à repousser l'élément tubulaire 25 axialement à l'extérieur de l'élément coaxial 35. De cette façon, lorsque ledit élément coaxial est verrouillé audit premier embout 12, l'extrémité de l'élément tubulaire 25 se trouve appliquée par la force du ressort 55 contre l'extrémité 18. Ainsi se trouve définie et délimitée la chambre annulaire 37, lorsque les deux embouts sont connectés l'un à l'autre.

L'élément coaxial 35 comporte au moins un conduit d'entrée de fluide de nettoyage 62 (liquide de rinçage et/ou air de séchage) et un conduit de sortie de fluide de nettoyage 64. De préférence, on prévoit deux conduits d'entrée tels que 62 et un circuit de sortie, les deux conduits d'entrée se faisant face à leur débouché dans la chambre 37 de façon à établir un régime d'écoulement turbulent pour nettoyer efficacement les parois. Ces conduits 62 et 64 débouchent sur la face interne de l'élément coaxial 35 en des emplacements leur permettant de communiquer avec ladite chambre annulaire 37. Le conduit de sortie de fluide de nettoyage 64 comporte une restriction calibrée d'écoulement 66.

Par ailleurs, le second clapet 28 est solidaire d'une tige 68 qui traverse axialement une paroi 69 séparant ledit conduit d'entrée 15a d'un vérin 72 agencé dans une cavité cylindrique 73 dudit second embout. La tige 68 est fixée au piston 75 de ce vérin. Un fluide de commande peut être injecté par un orifice 76 dans l'une des chambres du vérin pour solliciter le piston dans un sens tendant à séparer le clapet 28 de son siège 27. Un ressort 78 est monté dans ladite cavité entre l'une de ses extrémités axiales et le piston de façon à solliciter ledit second clapet 28 en position de fermeture, c'est-à-dire en application contre le siège 27.

Le fonctionnement est le suivant.

Pendant tout le fonctionnement, la peinture est maintenue sous pression dans le conduit d'entrée 15a et dans le conduit connecté à la sortie 13, la pression qui règne à la sortie 13 étant bien entendu inférieure à celle qui règne dans le conduit d'entrée 15a. Lorsque les deux embouts 12 et 14 sont séparés, les deux clapets s'opposent à toute sortie de fluide, le ressort 78, en particulier, développant une force suffisante pour maintenir le clapet 28 en application contre son siège 27.

La chambre 48 étant pressurisée pour libérer les billes 39, les deux embouts 12 et 14 sont rapprochés l'un de l'autre. L'accouplement a pour effet, dans un premier temps, d'appliquer le joint 52 contre l'extrémité 18, puis d'appliquer le clapet 20 contre le clapet 28 et, la surface 26 contre l'extrémité 18 de l'embout 12. La compression du ressort 55, en fin de course de raccordement, permet à la face 18 de l'embout 12 de venir en contact avec le joint 38. La dépressurisation de la chambre 48 permet au ressort 46 d'assurer l'appui de l'élément coaxial 35 contre l'extrémité 18 de l'embout 12, grâce aux actions conjuguées de la rampe 44, des billes 39 et du flanc incliné 51 de la gorge 50. La chambre annulaire 37 est alors définie.

Si une pression de commande est appliquée au vérin 72 par l'orifice 76, ou si la pression du fluide dans le conduit 15a atteint une valeur prédéterminée suffisante, le clapet 28 se sépare de son siège 27 et repousse le clapet 20. Le fluide peut donc circuler de l'entrée 15 vers la sortie 13.

Lorsqu'on désire séparer les deux parties, il suffit de supprimer la pression de commande dans le vérin 72 et/ou de faire baisser la pression du fluide lui-même à l'entrée 15. Les deux clapets 28 et 20 reviennent en appui sur leur siège 27 et 23 respectivement. La circulation de fluide s'arrête.

Un fluide de rinçage, par exemple constitué d'un mélange d'un liquide approprié et d'air comprimé, est alors introduit par le conduit 62 jusque dans la chambre 37; il est évacué par le conduit 64. Grâce à la chute de pression aux bornes de la restriction d'écoulement 66, la pression du fluide de rinçage dans la chambre 37 est suffisante pour vaincre l'action du ressort 55 et provoquer un retrait de l'élément tubulaire 25 par rapport à l'élément coaxial 35. Le fluide de rinçage peut donc nettoyer la totalité de la surface de jonction entre les embouts 12 et 14. Après le rinçage proprement dit, de l'air sous pression est injecté de la même façon dans la chambre 37, ce qui maintient ou provoque le même retrait de l'élément tubulaire 25 et donc le séchage de la surface de jonction. Lorsque le séchage est achevé, la pression d'air dans la chambre 37 est supprimée et les deux embouts reviennent en contact. Ils peuvent alors être déconnectés l'un de l'autre, le déverrouillage du système à billes s'effectuant par injection d'air comprimé dans la chambre d'actionnement 48. Il est à noter que la pression du liquide de rinçage ou de l'air de séchage est prédéterminée pour séparer les deux faces à nettoyer sans affecter l'étanchéité des deux clapets, notamment le clapet 20 maintenu en application sur son siège par le ressort 22.

## Revendications

1. Dispositif de raccordement de deux parties de conduit, notamment pour un circuit de fluide polluant, comprenant un premier embout (12) renfermant un premier clapet mobile (20) coopérant avec un premier siège pour isoler une sortie de fluide (13), un second embout (14) comportant un élément tubulaire (25) définissant un conduit d'entrée (15a) et renfermant un second clapet (28) mobile, sollicité vers un second siège (27) pour isoler une entrée de fluide, des moyens de nettoyage des surfaces de rencontre des deux embouts et dans lequel les deux clapets sont respectivement pourvus de surfaces de contact mutuel de formes complémentaires et sont agencés pour pouvoir se déplacer conjointement en restant en contact, de façon à permettre le passage dudit fluide, caractérisé en ce que lesdits moyens de nettoyage comportent un élément coaxial (35) extérieur audit élément tubulaire (25) dans lequel ledit second clapet (28) est monté mobile axialement en étant élastiquement sollicité vers ledit second siège lui-même défini coaxialement audit conduit d'entrée, en ce que ces deux éléments sont montés avec possibilité de coulissement axial relatif, en ce que ledit élément coaxial est susceptible de venir s'appliquer contre une extrémité dudit premier embout sur laquelle se situe ledit premier clapet, ledit premier clapet étant élastiquement sollicité vers ledit premier siège, et en ce que, lorsque les deux embouts sont raccordés, ledit élément coaxial définit avec ledit élément tubulaire et ladite extrémité, une chambre annulaire (37) d'injection de fluide de nettoyage et/ou d'air de séchage.

2. Dispositif de raccordement selon la revendication 1, caractérisé en ce qu'un ressort (55) est monté entre deux épaulements respectifs dudit élément tubulaire et dudit élément coaxial.

3. Dispositif de raccordement selon la revendication 2, caractérisé en ce que ledit élément coaxial comporte au moins un conduit d'entrée de fluide de nettoyage (62) et au moins un conduit de sortie d'un tel fluide (64), ces conduits débouchant en des emplacements leur permettant de communiquer avec ladite chambre annulaire.

4. Dispositif de raccordement selon la revendication 3, caractérisé en ce qu'il comporte deux conduits d'entrée de fluide de nettoyage (62).

5. Dispositif de raccordement selon la revendication 4, caractérisé en ce que ces deux conduits d'entrée de fluide de nettoyage se font face à leur débouché dans ladite chambre annulaire (37).

6. Dispositif de raccordement selon la revendication 3, caractérisé en ce que ledit conduit de sortie de fluide de nettoyage comporte une restriction calibrée d'écoulement (66).

7. Dispositif de raccordement selon la revendication 6, caractérisé en ce que les surfaces à nettoyer sont séparées par ajustement de la pression de fluide dans ladite chambre annulaire (37).

8. Dispositif de raccordement selon l'une des revendications précédentes, caractérisé en ce que les parties en regard des deux embouts ont des formes sensiblement complémentaires pour ne pas emprisonner d'air entre eux lors d'un accouplement.

9. Dispositif de raccordement selon la revendication 1, caractérisé en ce que les parois de ladite chambre annulaire (37) au moins sont traitées pour éviter l'adhérence des fluides employés.

**Patentansprüche**

1. Verbindungsvorrichtung zwischen zwei Rohrleitungsteilen, insbesondere für ein System mit umweltbelastender Flüssigkeit, mit einem ersten Rohrnippel (12), der ein bewegliches erstes Ventilorgan (20) umschließt, das mit einem ersten Ventilsitz zusammenwirkt um einen Fluidauslaß (13) zu verschließen, einem zweiten Rohrnippel (14) mit einem rohrförmigen Teil (25), das eine Einlaßleitung (15a) bildet und ein zweites bewegliches Ventilorgan (28) umschließt, das in Richtung auf einen zweiten Ventilsitz (27) belastet ist um einen Fluideinlaß zu sperren, einer Einrichtung zum Reinigen der Stoßflächen der beiden Rohrnippel, bei der die beiden Ventilorgane jeweils mit Stoßflächen von komplementärer Formgestaltung versehend und so eingerichtet sind, daß sie unter Aufrechterhaltung ihres Kontaktes zusammen verschlieblich sind, dergestalt, daß sie den Fluiddurchfluß gestatten, **dadurch gekennzeichnet**, daß die Reinigungseinrichtung zum Reinigen ein außerhalb des rohrförmigen Teils (25) liegendes Teil (35) umfaßt, in welchem das zweite Ventilorgan (28) axial verschieblich und elastisch belastet in Richtung des zweiten Ventilsitzes angeordnet ist, der seinerseits in der Einlaßleitung koaxial angeordnet ist, daß diese beiden Teile mit der Möglichkeit zu einer axialen Relativverschiebung angebracht sind, daß das koaxiale Teil geeignet ist an ein Ende des ersten Rohrnippels zur Anlage zu kommen, an welchem sich das erste Ventilorgan befindet das elastisch in Richtung des ersten Ventilsitzes belastet ist, und daß nach dem Verbinden der beiden Rohrnippel das koaxiale Teil mit dem rohrförmigen Teil sowie dem genannten Ende eine ringförmige Einspritzkammer (37) für das Reinigungsfluid und-/oder die Trocknungsluft begrenzen.

2. Vorrichtung nach Anspruch 1, dadurch gekennzeichnet, daß eine Feder (55) zwischen zwei entsprechenden Schultern des rohrförmigen Teils bzw. des koaxialen Teils angebracht ist.

3. Vorrichtung nach Anspruch 2, dadurch gekennzeichnet, daß das koaxiale Teil mindestens eine Einlaßleitung (62) für ein Reinigungsfluid und mindestens eine Auslaßleitung (64) für dieses Fluid umfaßt, wobei diese Leitungen an Orten münden, die sie mit der ringförmigen Kammer verbinden.

4. Vorrichtung nach Anspruch 3, dadurch gekennzeichnet, daß sie zwei Reinigungsfluid-Einlaßleitungen (62) umfaßt.

5. Vorrichtung nach Anspruch 4, dadurch gekennzeichnet, daß sich die beiden Reinigungsfluid-Einlaßleitungen an ihrer Einmündung in die ringförmige Kammer (37) gegenüberliegen.

6. Vorrichtung nach Anspruch 3, dadurch gekennzeichnet, daß die Reinigungsfluid-Auslaßleitung eine kalibrierte Drosselstelle (66) umfaßt.

7. Vorrichtung nach Anspruch 6, dadurch gekennzeichnet, daß die zu reinigenden Flächen durch Einstellung des Fluiddrucks in der ringförmigen Kammer 37 voneinander getrennt werden.

8. Vorrichtung nach einem der vorstehenden Ansprüche, dadurch gekennzeichnet, daß die aneinanderstoßenden Teile der beiden Rohrnippel eine komplementäre Formgestaltung aufweisen, um zu verhindern, daß während des Ankuppelns Luft zwischen ihnen eingeschlossen wird.

9. Vorrichtung nach Anspruch 1, dadurch gekennzeichnet, daß zumindest die Wände der ringförmigen Kammer (37) Kammer (37) behandelt sind, um ein Anhaften der eingesetzten Fluide zu vermeiden.

**Claims**

1. A device for connecting two conduit parts, in particular for a pollutant fluid circuit, comprising a first connector portion (12) containing a first movable valve member (20) co-operating with a first seat to isolate a fluid outlet (13), a second connector portion (14) comprising a tubular element (25) defining an inlet conduit (15a) and containing a second movable valve member (28) rich is urged towards a second seat (27) to isolate a fluid inlet, means for cleaning the contacting surfaces of the two connector portions, and in rich the two valve members are respectively provided with mutual contact surfaces of complementary shapes and are arranged to be capable of being displaced jointly while remaining in contact so as to permit said fluid to pass, characterised in that said cleaning means comprise a coaxial element (35) outside said tubular element (25) in rich said second valve member (28) is axially movably mounted, being elastically urged towards said second seat which is itself defined coaxially with respect to said inlet conduit, that said two elements are mounted with the capability of relative axial sliding movement, that said coaxial element is capable of coming to bear against an end of said first connector portion on which said first valve member is disposed, said first valve member being elastically urged towards said first seat, and that, when the two connector portions are connected, said coaxial element defines with said tubular element and said end an annular chamber (37) for the injection of cleaning fluid and/or drying air.

2. A connecting device according to claim 1 characterised in that a spring (55) is mounted between two respective shoulders on said tubular element and said coaxial element.

3. A connecting device according to claim 2 characterised in that said coaxial element comprises at least one cleaning fluid inlet conduit (62) and at least one cleaning fluid outlet conduit (64), said conduits opening at locations rich permit them to communicate with said annular chamber.

4. A connecting device according to claim 3 characterised in that it comprises two cleaning fluid inlet conduits (62).

5. A connecting device according to claim 4 characterised in that said two cleaning fluid inlet conduits are disposed opposite each other where they open into said annular chamber (37).

6. A connecting device according to claim 3 characterised in that said cleaning fluid outlet conduit comprises a calibrated flow restrictor (66).

7. A connecting device according to claim 6 characterised in that the surfaces to be cleaned are separated by adjustment of the fluid pressure in said annular chamber (37).

8. A connecting device according to one of the preceding claims characterised in that the facing parts of the two connector portions are of substantially complementary shapes in order not to trap air between them upon coupling.

9. A connecting device according to claim 1 characterised in that the walls of said annular chamber (37) at least are treated to prevent the fluids used from adhering thereto.

# FIG. 1

# FIG. 2